# EUROPEAN PATENT SPECIFICATION

(11) **EP 3 120 684 B1**
(45) Date of publication and mention of the grant of the patent: **12.09.2018**
(21) Application number: 16179459.9
(22) Date of filing: 14.07.2016
(51) Int. Cl.: A01D 34/82, A01D 34/68

(54) **ELECTRIC LAWN MOWER WITH SAFETY SYSTEM**
ELEKTRISCHER RASENMÄHER MIT SICHERHEITSVORRICHTUNG
TONDEUSE ÉLECTRIQUE AVEC SYSTÈME DE SÉCURITÉ

(30) Priority: 20.07.2015 IT UB20152293
(43) Date of publication of application: 25.01.2017
(73) Proprietor: Stiga S.p.A. in breve anche St. S.p.A., 31033 Castelfranco Veneto (TV) (IT)
(72) Inventor: CECCHETTO, Mauro, 35018 SAN MARTINO DI LUPARI (PD) (IT); SCAPIN, Michele, 35013 CITTADELLA (PD) (IT); PUPPIN, Marco, 30027 SAN DONA' DI PIAVE (VE) (IT)
(74) Representative: Mittler, Andrea

(56) References cited:
- EP-A1- 2 447 967
- DE-U1- 8 108 936
- DE-U1- 29 521 118
- US-A- 4 145 864
- US-A1- 2007 214 761
- US-A1- 2010 307 908
- US-B1- 6 501 281

## Description

The present invention relates to an electric lawn mower with safety system.

Manual, rear push electric lawn mowers are very common because they are suitable for gardening activities which relate to small or large lawns. A lawn of such dimensions indeed may also be easily managed by a non-professional user using a practical electric push lawn mower which, in addition to good performance, offers minimum noise levels.

However, rear push electric lawn mowers are often not such a type of equipment as to provide complete safety, as is generally the case for any type of gardening machine. Particularly, the cutting blades of the lawn mower may be a serious danger for the operator when they are operating since the known machinery does not ensure a high level of protection. Indeed, it is always good for the operator to be behind the lawn mower in pushing position when it is on, even though this does not always occur and the operator may be injured.

Current electric machines comprise a button and a lever, both mechanical, which act on an electric switch found inside the handlebar of the lawn mower. The engine is turned on only if the button is pressed and the lever is simultaneously pulled. Releasing the lever turns off the engine. Therefore, the lawn mower turns off if at least one hand is not on the handlebar.

Moreover, much of the charge of the battery which supplies electric lawn mowers is dispersed because they are often kept operating even when they are not used during the actual mowing time. Thus, the autonomy of the lawn mowers is reduced, with the risk that the operator may end up with a run-down battery when the work is still not complete.

DE-29521118-U1 describes a lawnmower comprising a safety system comprising active membranes which is configured to enable the ignition of the lawn mower only if at least one active membrane of said active membranes is pressed.

EP-2447967-A1 describes a lawnmower comprising an electronic board provided with a power button for blades.

It is the object of the present invention to provide an electric lawn mower which offers the operator a high level of safety while simultaneously optimizing the use of the battery which supplies the lawn mower.

In accordance with the invention, such an object is achieved by an electric lawn mower as described in claim 1.

These and other features of the present invention will become more apparent from the following detailed description of a practical embodiment thereof, shown by way of non-limitative example in the accompanying drawings, in which:
Figure 1 shows a rear push electric lawn mower according to the present invention;
Figure 2 shows a detail of the lawn mower in Figure 1.

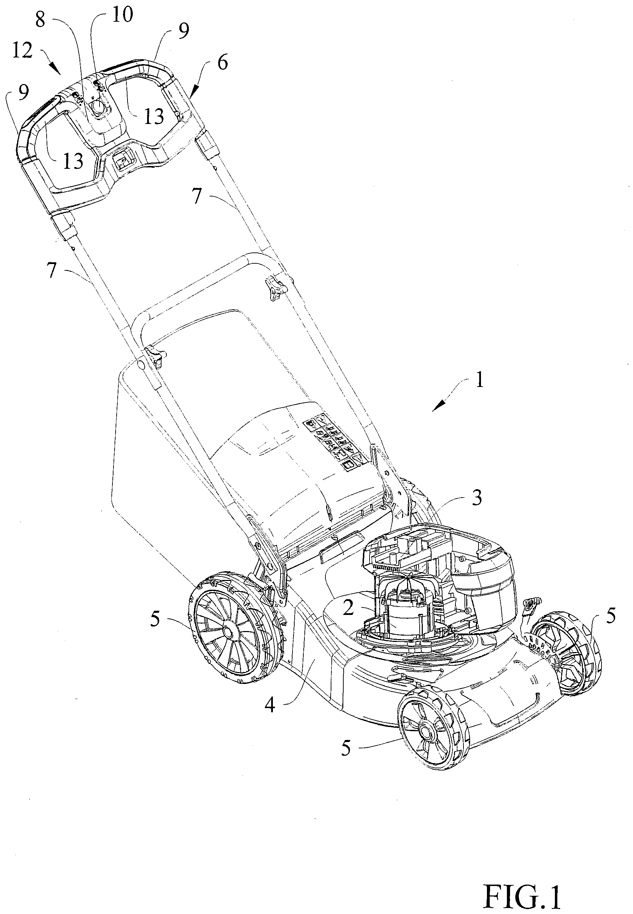

With reference to Figure 1, a rear push electric lawn mower 1 is shown according to the present invention.

Said lawn mower 1 comprises at least one brushless engine 2 with permanent magnets provided with an electronic control unit 3, said engine 2 being suitable to actuate at least one cutting blade. A battery (e.g. a 72V battery) provides the electric supply for the lawn mower 1 and in particular, for the electronic control unit 3 of engine 2.

The lawn mower 1 further comprises a supporting body 4 provided with wheels 5, the body being suitable to support engine 2, and a handlebar 6 for the rear pushing of the lawn mower 1 by an operator; handlebar 6 is connected to the supporting body 4 by means of a pair of pieces of tube 7 inserted and fastened in suitable seats of the body 4 itself.

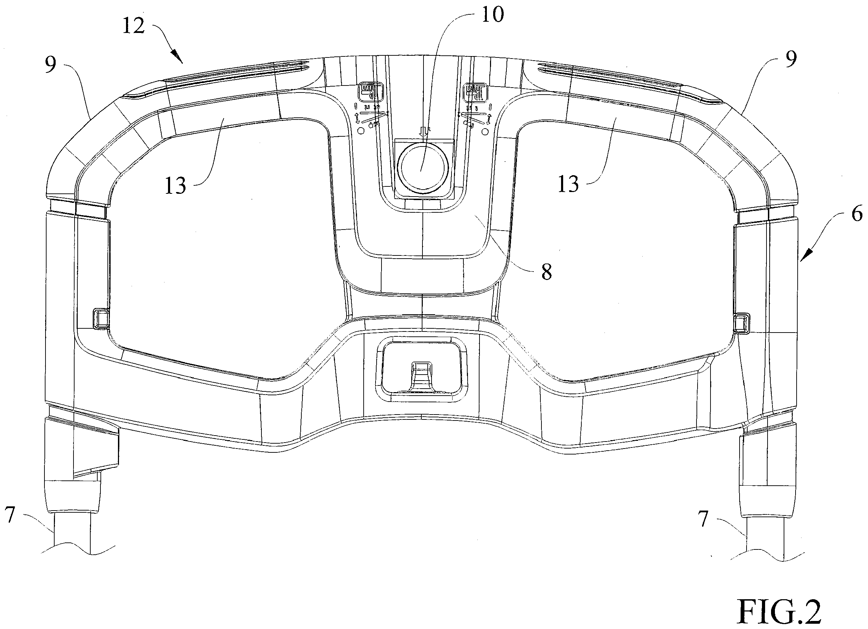

Handlebar 6 (Fig. 2) particularly comprises a central body 8 and a pair of grabbable side portions 9 and consists of two plastic material half-shells assembled together, which enclose an electronic board therein, provided with a power button 10 accessible to the operator at the central body 8. In electrical terms, the electronic board is connected to the electronic control unit 3 of engine 2 which actuates the blade of the lawn mower 1, and it receives the supply (e.g. a 5V or 12V voltage) from the same electronic control unit 3.

Moreover, the lawn mower 1 comprises a safety system 12 configured to enable the ignition of the lawn mower 1 only if handlebar 6 is grabbed by the operator. In particular, the safety system 12 uses the electronic board and comprises a pair of active membranes 13 each placed on one of said grabbable side portions 9 and each electrically connected to the electronic board.

However, the use of alternative technologies in place of the active membranes 13 is acceptable, such as for example force/pressure sensors or the like, which perform the same function.

The safety system 12 is configured to enable the ignition of the lawn mower 1 only if said active membranes 13 and said power button 10 are pressed by means of the handle of handlebar 6, simultaneously or within a period of time (e.g. a few seconds) from each other. In particular, the engine 2 of the lawn mower 1 starts only when: either at least one of the active membranes 13 and said power button 10 are pressed simultaneously (which is not encompassed by the scope of the present invention), or first the power button 10 and then both the active membranes 13 are pressed within said period of time. Two embodiments of the safety system are described below in detail, depending on the two starting modes of the engine 2 of the lawn mower 1 above.

In a first embodiment (which is not encompassed by the scope of the present invention), the power button 10 is an ignition button suitable to send an ignition signal to the electronic control unit 3 of engine 2. The electronic board is programmed to monitor at least one electric quantity related to the state of said active membranes 13 and to enable or disable the ignition power button 10 as a response. Each active membrane 13 substantially is a switch which has an ON state (closed switch) and an OFF state (open switch). Thus, the safety system 12 is configured to enable the sending of an ignition signal only when at least one of the active membranes 13 is in ON state.

In a further embodiment, if they are both pressed by the operator, the active membranes 13 are suitable to send an ignition signal to the electronic control unit 3 of engine 2 to actuate said at least one blade. The electronic board here is programmed to monitor at least one electric quantity related to the state of said power button 10 and to enable the ignition of engine 2 only if both the active membranes 13 are pressed within said period of time from when the power button 10 is pressed.

The power button 10 here is an enabling switch and is a switch which is brought to the OFF state (open switch) within said period of time, after it has been arranged in ON state (closed switch) by pressing it. Thus, the safety system 12 is configured to enable the sending of said ignition signal only when at least the power button 10 is in ON state.

Moreover, the safety system 12 is configured to turn off the lawn mower 1 at the instant when the operator releases the handle of said side portions 9 and neither of the active membranes 13 is under pressure any longer. At the instant when the operator releases handlebar 6, the lawn mower 1 preferably turns off within a specific time interval (e.g. within 3 seconds). The electronic board is also programmed to send a turn off signal to the electronic control unit 3 of engine 2 within such a time interval when said electric quantity indicates that the state of both the active membranes 13 has passed from the ON state (closed switch) to the OFF state (open switch).

The power button 10 may also consist of a further active membrane placed, as mentioned, on the central body 8 of handlebar 6. Advantageously, the power button 10 is made of a transparent material and is provided with backlight so that a first and a second light signal may visually indicate to the operator if the ignition of the lawn mower 1 is enabled or, vice versa, disabled, respectively. For example, the first light signal may be a flashing light, while the second signal may be a solid light.

In the case of the first embodiment (not encompassed by the scope of the present invention), during operation the power button 10 lights up by flashing when the operator grabs handlebar 6 at the side portions 9 and at least one of the active membranes 13 is pressed. When the operator pushes the power button 10 while holding down at least one of the active membranes 13, the flashing light passes to a solid light and the engine 2 of the lawn mower 1 turns on. At the instant when the operator releases his/her grip on handlebar 6 by releasing both the active membranes 13, engine 2, which actuates the cutting blade, turns off within said time interval.

In the case of the second embodiment, the operator initially presses the power button 10 which lights up flashing. If both the active membranes 13 are pressed within a specific period of time, the engine 2 of the lawn mower 1 turns on and the flashing light of the power button 10 passes to a solid light; otherwise, if said period of time is exceeded, the flashing light of the power button 10 turns off and the power button 10 will require pressing again to re-enable starting the lawn mower 1. Once again, when the operator then releases his/her grip on both the active membranes 13, engine 2 turns off within said time interval.

Due to the back lighting, the power button 10 may also indicate to the operator the charge level of the battery of the lawn mower 1, e.g. by means of three light signals of different color: a green light may indicate a charge of the battery exceeding 2/3 of the total charge thereof, a yellow light may indicate a charge ranging between 1/3 and 2/3 of the total charge, and a red light may indicate a charge below 1/3 of the total charge.

In a another example, the charge level of the battery may be indicated by means of a total or partial lighting of the power button 10, using one color alone (a white light). This may be obtained by dividing the power button 10 into "slices of cake", or by creating a transparent ring about it and wholly lighting it, or just lighting one or more portions thereof, to indicate the various charge levels.

In light of the foregoing, the lawn mower according to the present invention will be operating only when the operator grabs the handlebar at the moment of use. Moreover, the operator may easily see the charge level of the battery and provide to recharge it in useful time.

## Claims

1. An electric lawn mower (1) comprising a handlebar (6) for the rear pushing of the lawn mower by an operator and a safety system (12) configured to enable the ignition of the lawn mower (1) only if said handlebar (6) is grabbed by the operator, wherein said safety system (12) comprises a pair of active membranes (13) electrically connected to an electronic board provided with a power button (10), said active membranes (13) each being placed on one of two grabbable side portions (9) of the handlebar (6) and said power button (10) being accessible to the operator at a central body (8) of the handlebar (6), **characterized in that** said safety system (12) is bung configured to enable the ignition of the lawn mower (1) only if said active membranes (13) and said power button (10) are pressed within a period of time from each (13) other (10), and also being configured to turn off the lawn mower (1) at the instant when both the active membranes (13) are released.

2. A lawn mower (1) according to claim 1, **characterized in that** said electronic board is connected to the electronic control unit (3) of the engine (2) which actuates at least one cutting blade of the lawn mower (1), and **in that** if both said active membranes (13) are pressed, they are suitable to send an ignition signal to the electronic control unit (3) for actuating said at least one blade, said electronic board being programmed to monitor at least one electric quantity related to the state of said power button (10) and to enable the ignition of the engine (2) only if both the active membranes (13) are pressed within said period of time from when the power button (10) is pressed.

3. A lawn mower (1) according to claim 2, **characterized in that** said power button (10) is a switch which is brought to the OFF state corresponding to open switch within said period of time, after it has been arranged in ON state corresponding to closed switch by pressing it, said safety system (12) being configured to enable the sending of said ignition signal only when the power button (10) is in ON state, and is also configured to send a turn off signal to the electronic control unit (3) at the instant when both the active membranes (13) pass from the ON state corresponding to closed switch to the OFF state corresponding to open switch.

4. A lawn mower (1) according to any one of the preceding claims, **characterized in that** said power button (10) is made of a transparent material provided with backlight so that a first and a second light signal are suitable to visually indicate to the operator if the ignition of the lawn mower (1) is enabled or, vice versa, disabled, respectively.

5. A lawn mower (1) according to any one of the preceding claims, **characterized in that** said power button (10) is configured to visually indicate to the operator the charge level of the battery of the lawn mower (1) by means of three light signals of different color.

6. A lawn mower (1) according to any one of the preceding claims, **characterized in that** said power button (10) is configured to visually indicate to the operator the charge level of the battery of the lawn mower (1) by means of a total or partial lighting of the power button (10) using a single color and dividing the power button (10) into "slices of cake", or by creating a transparent ring about it and wholly lighting it, or just lighting one or more portions thereof, to indicate the various charge levels.

## Patentansprüche

1. Elektrischer Rasenmäher (1), der einen Griff (6) zum Schieben des Rasenmähers von hinten durch eine Bedienungsperson und ein Sicherheitssystem (12) umfasst, das dafür konfiguriert ist, die Zündung des Rasenmähers (1) nur dann zu ermöglichen, wenn die Bedienungsperson den Griff greift, wobei das Sicherheitssystem (12) ein Paar aktive Membranen (13) aufweist, die elektrisch mit einer elektronischen Platine verbunden sind, die eine Ein-/Aus-Schaltfläche (10) aufweist, wobei jede der aktiven Membranen (13) an einem der beiden greifbaren Seitenteile (9) des Griffs (6) angeordnet ist und die Bedienungsperson an einem Mittelkörper (8) des Griffs (6) auf die Ein-/Aus-Schaltfläche (10) zugreifen kann,
**dadurch gekennzeichnet, dass** das Sicherheitssystem (12) dafür konfiguriert ist, die Zündung des Rasenmähers (1) nur dann zu ermöglichen, wenn die aktiven Membranen (13) und die Ein-/Aus-Schaltfläche (10) innerhalb eines bestimmten zeitlichen Abstands zueinander (13) (10) gedrückt werden, und außerdem dafür konfiguriert ist, den Rasenmäher (1) in dem Moment auszuschalten, wenn beide aktiven Membranen (13) gelöst werden.

2. Rasenmäher (1) nach Anspruch 1, **dadurch gekennzeichnet, dass** die elektronische Platine mit der elektrischen Steuereinheit (3) des Motors (2) verbunden ist, die mindestens ein Schneideblatt des Rasenmähers (1) betätigt, und dadurch, dass beim Drücken beider aktiven Membranen (13) diese dazu geeignet sind, ein Zündsignal an die elektrische Steuereinheit (3) zum Betätigen des mindestens einen Blattes zu schicken, wobei die elektronische Platine dafür programmiert ist, mindestens eine elektrische Größe, die sich auf den Zustand der Ein-/Aus-Schaltfläche (10) bezieht, zu überwachen, und die Zündung des Motors (2) nur dann zu ermöglichen, wenn beide aktive Membranen (13) innerhalb des zeitlichen Abstands ab dem Zeitpunkt, zu dem die Ein/Aus-Schaltfläche (10) gedrückt wird, gedrückt werden.

3. Rasenmäher (1) nach Anspruch 2, **dadurch gekennzeichnet, dass** die Ein-/Aus-Schaltfläche (10) ein Schalter ist, der innerhalb des zeitlichen Abstands, nachdem er in einem EIN-Zustand eingestellt war, der einem geschlossenen Schalter entspricht, in den AUS-Zustand, der einem offenen Schalter entspricht, gebracht wird, indem er gedrückt wird, wobei das Sicherheitssystem (12) dafür konfiguriert ist, das Senden des Zündsignals nur dann zu ermöglichen, wenn die Ein-/Aus-Schaltfläche (10) in dem Ein-Zustand ist, und außerdem dafür konfiguriert ist, ein Ausschaltsignal in dem Moment, in dem beide aktiven Membranen (13) aus dem EIN-Zustand, der einem geschlossenen Schalter entspricht, in den AUS-Zustand, der einem offenen Schalter entspricht, übergehen, an die elektrische Steuereinheit (3) zu schicken.

4. Rasenmäher (1) nach einem der vorhergehenden Ansprüche, **dadurch gekennzeichnet, dass** die Ein-/Aus-Schaltfläche (10) aus einem transparenten Material hergestellt ist, das ein Rücklicht aufweist, so dass ein erstes und ein zweites Lichtsignal dazu geeignet sind, der Bedienungsperson optisch anzuzeigen, ob die Zündung des Rasenmähers (1) ermöglicht bzw. umgekehrt blockiert wird.

5. Rasenmäher (1) nach einem der vorhergehenden Ansprüche, **dadurch gekennzeichnet, dass** die Ein-/Aus-Schaltfläche (10) dafür konfiguriert ist, der Bedienungsperson den Ladepegel der Batterie des Rasenmähers (1) optisch mittels drei Lichtsignalen mit verschiedenen Farben anzuzeigen.

6. Rasenmäher (1) nach einem der vorhergehenden Ansprüche, **dadurch gekennzeichnet, dass** die Ein-/Aus-Schaltfläche (10) dafür konfiguriert ist, der Bedienungsperson den Ladepegel der Batterie des Rasenmähers (1) optisch mittels einer vollständigen oder teilweisen Beleuchtung der Ein-/Aus-Schaltfläche (10) unter Verwendung einer einzigen Farbe und mittels Unterteilung der Ein-/Aus-Schaltfläche (10) in "Kuchenstücke" anzuzeigen, oder indem um diese herum ein transparenter Ring gebildet wird und sie vollständig beleuchtet wird, oder indem nur einer oder mehrere Teile davon beleuchtet werden, um die verschiedenen Ladepegel anzuzeigen.

## Revendications

1. Tondeuse électrique (1) comprenant une poignée (6) pour qu'un opérateur pousse la tondeuse par l'arrière et un système de sécurité (12) configuré pour permettre l'allumage de la tondeuse (1) uniquement si ladite poignée (6) est saisie par l'opérateur, dans laquelle ledit système de sécurité (12) comprend une paire de membranes actives (13) raccordées, par voie électrique, à une carte électronique dotée d'un interrupteur (10), lesdites membranes actives (13) étant chacune placées sur l'une des deux parties latérales saisissables (9) de la poignée (6) et ledit interrupteur (10) est accessible pour l'opérateur au niveau d'un corps central (8) de la poignée (6), **caractérisée en ce que** ledit système de sécurité (12) est configuré pour permettre l'allumage de la tondeuse (1) uniquement si lesdites membranes actives (13) et ledit interrupteur (10) sont enfoncés dans la même période de temps les unes (13) par rapport à l'autre (10) et étant également configuré pour arrêter la tondeuse (1) instantanément lorsque les deux membranes actives (13) sont relâchées.

2. Tondeuse (1) selon la revendication 1, **caractérisée en ce que** ladite carte électronique est raccordée à l'unité de commande électronique (3) du moteur (2) qui actionne au moins une lame de coupe de la tondeuse (1), et **en ce que** si deux desdites membranes actives (13) sont comprimées, elles sont appropriées pour envoyer un signal d'allumage à l'unité de commande électronique (3) pour actionner ladite au moins une lame, ladite carte électronique étant programmée pour surveiller au moins une quantité électrique concernant l'état dudit interrupteur (10) et pour permettre l'allumage du moteur (2) uniquement si les deux membranes actives (13) sont comprimées dans ladite période de temps à partir du moment où l'interrupteur (10) est enfoncé.

3. Tondeuse (1) selon la revendication 2, **caractérisée en ce que** ledit interrupteur (10) est un commutateur qui est amené à l'état d'ARRET correspondant au commutateur ouvert dans ladite période de temps, il a été ensuite disposé à l'état de MARCHE correspondant au commutateur fermé en l'enfonçant, ledit système de sécurité (12) étant configuré pour permettre l'envoi dudit signal d'allumage uniquement lorsque l'interrupteur (10) est à l'état de MARCHE, et est également configuré pour envoyer un signal d'arrêt à l'unité de commande électronique (3) instantanément lorsque les deux membranes actives (13) passent de l'état de MARCHE correspondant au commutateur fermé, à l'état d'ARRET correspondant au commutateur ouvert.

4. Tondeuse (1) selon l'une quelconque des revendications précédentes, **caractérisée en ce que** ledit interrupteur (10) est réalisé avec un matériau transparent prévu avec un rétroéclairage de sorte qu'un premier et un second signal lumineux sont appropriés pour indiquer visuellement à l'opérateur si l'allumage de la tondeuse (1) est activé ou vice versa, désactivé, respectivement.

5. Tondeuse (1) selon l'une quelconque des revendications précédentes, **caractérisée en ce que** ledit interrupteur (10) est configuré pour indiquer visuellement à l'opérateur le niveau de charge de la batterie de la tondeuse (1) au moyen de trois signaux lumineux de différentes couleurs.

6. Tondeuse (1) selon l'une quelconque des revendications précédentes, **caractérisée en ce que** ledit interrupteur (10) est configuré pour indiquer visuellement à l'opérateur le niveau de charge de la batterie de la tondeuse (1) au moyen d'un éclairage total ou partiel de l'interrupteur (10) en utilisant une seule couleur et en divisant l'interrupteur (10) en « tranches de gâteau » ou en créant un anneau transparent autour de ce dernier et en l'éclairant complètement ou en n'éclairant juste qu'une ou plusieurs parties de ce dernier, pour indiquer les différents niveaux de charge.
